# EUROPÄISCHE PATENTSCHRIFT

(11) **EP 1 280 844 B1**
(45) Veröffentlichungstag und Bekanntmachung des Hinweises auf die Patenterteilung: **16.11.2005**
(21) Anmeldenummer: 01945123.6
(22) Anmeldetag: 10.05.2001
(51) Int. Cl.: C08G 65/26, C08G 8/28, C08G 18/48, C11D 1/72

(54) **HOCHFUNKTIONELLE POLYETHERPOLYOLE UND VERFAHREN ZU DEREN HERSTELLUNG**
HIGHLY FUNCTIONAL POLYETHER POLYOLS AND METHODS FOR PRODUCTION THEREOF
POLYOLS DE POLYETEHER HAUTEMENT FONCTIONNELS ET LEUR PROCEDE DE PRODUCTION

(30) Priorität: 12.05.2000 DE 10023250; 12.05.2000 DE 10023255
(43) Veröffentlichungstag der Anmeldung: 05.02.2003
(73) Patentinhaber: BASF Aktiengesellschaft, 67056 Ludwigshafen (DE)
(72) Erfinder: BÖHME, Peter, 01561 Böhla (DE); PCOLINSKI, Michael, Bloomfield, MI 48301 (US); ROTERMUND, Udo, 01990 Ortrand (DE); HABICHER, Wolf-Dieter, 01217 Dresden (DE); ZIEMER, Antje, 01279 Dresden (DE)
(86) Internationale Anmeldenummer: PCT/EP2001/005426
(87) Internationale Veröffentlichungsnummer: WO 2001/085826

(56) Entgegenhaltungen:
- EP-A- 0 671 220
- US-A- 4 032 514
- PATENT ABSTRACTS OF JAPAN vol. 1999, no. 14, 22. Dezember 1999 (1999-12-22) & JP 11 246540 A (UBE IND LTD), 14. September 1999 (1999-09-14)
- PATENT ABSTRACTS OF JAPAN vol. 014, no. 220 (C-0717), 10. Mai 1990 (1990-05-10) & JP 02 053749 A (WAKAYAMA PREF GOV), 22. Februar 1990 (1990-02-22) in der Anmeldung erwähnt
- PATENT ABSTRACTS OF JAPAN vol. 1999, no. 05, 31. Mai 1999 (1999-05-31) & JP 11 043524 A (SHINNAKAMURA KAGAKU KOGYO KK), 16. Februar 1999 (1999-02-16)
- CHEMICAL ABSTRACTS, vol. 124, no. 12, 1996 Columbus, Ohio, US; abstract no. 235560a, ICHIMATSU T.: "Studies on the functionalisation of inclusion compounds. Synthesis of Calixarene derivs. as detergents" XP002179118 & CHINESE CHEM. LETTS., Bd. 4, Nr. 11, 1993, Seiten 953-956,

## Beschreibung

Die Erfindung betrifft hochfunktionelle Polyetherpolyole auf der Basis von Resorcin sowie Verfahren zur Herstellung solcher hochfunktioneller Polyetherpolyole durch Alkoxylierung von Calix[n]resorcinarenen oder Umsetzung von Resorcin und Resorcinderivaten in einer Gesamtsynthese.

Calix[n]arene sind cyclische Verbindungen, die durch Kondensation von Phenolen und Aldehyden hergestellt werden können. Eine spezielle Untergruppe der Calix[n]arene stellen die Calix[n]-resorcinarene dar, zu deren Synthese als Phenolkomponente Resorcin bzw. Resorcinderivate eingesetzt werden.

Die Synthese der Calix[n]resorcinarene durch sauer katalysierte Kondensation eines Aldehyds mit Resorcin ist bekannt. Die Kondensation in Gegenwart von Salzsäure wird beispielsweise durch A.G. S. Högberg (J. Org. Chem. 1980, 45, 4498-4500) und in Gegenwart von Schwefelsäure durch J.B. Niederl und H.J. Vogel (J. Am. Chem. Soc. 1940, 62, 2512) beschrieben. DD 290 412 zeigt die Herstellung verschiedener Calix[n]resorcinarene durch die Umsetzung von Resorcin und unterschiedlichsten Derivaten, mit Salzsäure oder Schwefelsäure katalysiert.

Die Umsetzung der cyclischen Verbindungen zu Polyetherpolyolen ist bisher nur für Calix[n]arene beschrieben worden:

Shi et al. setzt Calix[8]aren mit Ethylenoxid unter Verwendung von äquivalenten Mengen an KO^{t}Bu um (Y. Shi, Z. Zhang, J. Chem. Soc., Chem. Commun. 1994, 7, 375-376). Das Calix[8]aren wird in Toluol gelöst und mit äquivalenten Mengen an KO^{t}Bu versetzt. Die Alkoholatbildung erfolgt in 8 h unter Rückfluss. Nach Abtrennung des Lösungsmittels wird das Alkoholat im Autoklaven mit Ethylenoxid unter Stickstoffatmosphäre vorgelegt und auf 170 bis 180°C erhitzt. Die Aufarbeitung erfolgt mittels Ionenaustauscher. Angestrebt für die Polyetherolbildung wird eine möglichst geringe Basenkonzentration, da Grenzwerte von 10 bzw. 100 ppm an Alkalikonzentrationen in Polyetherolen existieren. Der Einsatz von äquivalenten Mengen an KO^{t}Bu ist zu hoch. Zur Verminderung von Chargenlaufzeiten wird eine kurze Zeit der Alkoholatbildung angestrebt. Weiterhin sollen Umsetzungen mit Alkylenoxiden bei niederen Temperaturen möglich sein, um möglichst helle Produkte erhalten zu können.

Cornforth et al. setzt zur Katalyse der Ethoxylierung rund 2 % K^{t}OBu oder elementares Kalium ein (J.W. Cornforth, E.D. Morgan, K.T. Potts, R.J. Rees, Tetrahedron Lett. 1973, 29, 1659-1667). Die Ethoxylierung erfolgt im Autoklaven bei 150°C in Toluol.
Zur Neutralisation der Reaktionsmischung wird während der Aufarbeitung Essigsäure zugegeben. Es werden die Senkung der Basenkonzentration sowie niedere Reaktionstemperaturen angestrebt.

Weiterhin wird die Alkoxylierung der Calix[n]arene beschrieben in US-A-4259464, US-A-4098717 und US-A-4032514. Hier wird die Alkoxylierung der Calix[n]arene bei 120 bis 140°C unter Verwendung von 3 bis 5 Masse-% KOH gezeigt. Zur Alkoholatbildung wird das Calix[n]aren in Xylen unter Zusatz von Wasser gelöst und mehrere Stunden unter Rückfluss erhitzt. Unter azeotropen Bedingungen wird das Wasser wieder entfernt. Die Herstellung des Alkoholates einschließlich Wasserentfernung dauert 3 bis 6 Stunden. Nach Überführung in einen Druckreaktor oder Autoklaven wird bei einer Reaktionstemperatur von 120 bis 140°C Alkylenoxid über 2 bis 12 h dosiert. Die verwendete Basenkonzentration ist zu hoch, um die niedrigen Grenzwerte nach der Entfernung des Kaliumsalzes erreichen zu können bzw. erfordert eine sehr aufwendige Aufarbeitung. Die Herstellung des Alkoholates über einen Zeitraum von 3 bis 6 h ist nicht ökonomisch.

Die Herstellung von Polyetherderivaten der Calix[n]arene durch Veretherung mit Polyethylenglycolderivaten der allgemeinen Formel X(CH₂CH₂O)ₘR unter Zusatz von Alkalimetallen (LiOH, NaOH, Na₂CO₃, K₂CO₃) und Phasentransferkatalyse in organischen Lösungsmitteln bei 40°C zeigt JP-A-2053749 auf.

Die Alkoxylierung der Calix[n]resorcinarene sowie die Synthese der Calix[n]resorcinarene und deren anschließende Alkoxylierung ohne zwischenzeitliche Aufarbeitung in einer Gesamtsynthese sind nicht bekannt. Die Verwendung solcher Produkte als Polyolkomponente in Schaumstoffen und als nichtionogene Tenside ist ebenfalls nicht beschrieben.

Die Polykondensationsprodukte aus Resorcin bzw. Resorcinderivaten und Aldehyden, die Calix[n]resorcinarene, sind synthetisch leicht zugänglich. Aufgrund ihrer hohen Anzahl an phenolischen OH-Gruppen sind sie als Ausgangsverbindungen für hochfunktionelle Polyetherpolyole interessant.

Aufgabe der Erfindung war die Entwicklung neuer hochfunktioneller Polyetherpolyole auf der Basis von Resorcin bzw. Resorcinderivaten sowie die Erstellung von Synthesewegen für die Herstellung solcher Polyetherpolyole. Diese hochfunktionellen Polyetherpolyole sollten beispielsweise für die Herstellung von Polyurethan (PUR)-Hartschaumstoffen geeignet sein.

Erfindungsgemäß wird die Aufgabe dadurch gelöst, dass Polyetherpolyole aufgebaut wurden, die herstellbar sind durch Alkoxylierung von Calix[n]resorcinarenen oder durch Umsetzung von Resorcin und/oder Resorcinderivaten mit Aldehyden und anschließende Anlagerung von Alkylenoxiden.

Gegenstand der Erfindung sind demzufolge hochfunktionelle Polyetherpolyole der allgemeinen Formel 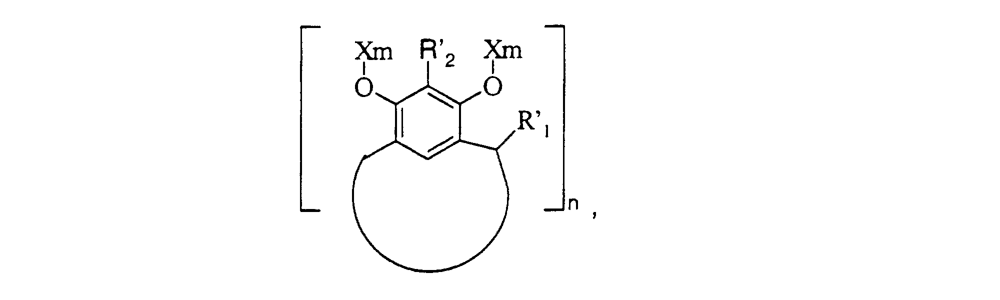 in der R'₁ unsubstituierte oder substituierte aliphatische oder aromatische Reste und R'₂ unsubstituierte oder substituierte aliphatische oder aromatische Reste, H, OH, Polyalkyletherketten oder Halogen sind, X Polyalkyletherketten oder H darstellt, wobei mindestens ein X eine Polyalkyletherkette ist, und m ganze Zahlen von 0 bis 20, wobei bei m gleich 0 Xm H bedeutet, sowie n ganze Zahlen von 4 bis 12 sind, sowie deren Verwendung zur Herstellung von Polyurethanen und nichtionogenen Tensiden.

Gegenstände der Erfindung sind weiterhin Verfahren zur Herstellung von hochfunktionellen Polyetherpolyolen durch Umsetzung von Calix[n]resorcinarenen der allgemeinen Formel 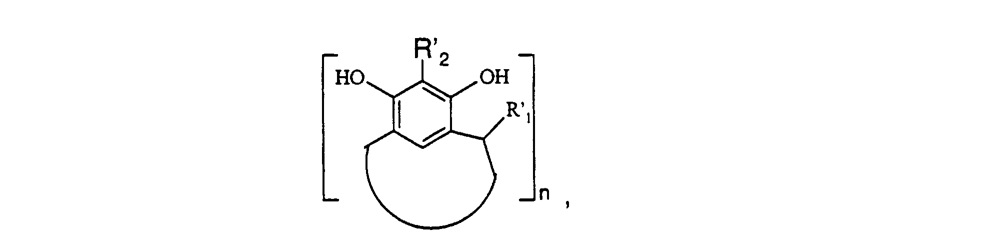 wobei R'₁ unsubstituierte oder substituierte aliphatische oder aromatische Reste und R'₂ unsubstituierte oder substituierte aliphatische oder aromatische Reste, H, OH, Polyalkyletherketten oder Halogen und n ganze Zahlen von 4 bis 12 sind, mit Alkylenoxiden oder durch Umsetzung von Resorcin und/oder Resorcinderivaten mit Aldehyden und anschließender Anlagerung von Alkylenoxiden in Lösungsmitteln unter Verwendung von Katalysatoren.

Die erfindungsgemäßen alkoxylierten Calix[n]resorcinarene sind als Polyolkomponenten für PUR, insbesondere PUR-Schaumstoffe interessant, da vom hohen Aromatenanteil positive Auswirkungen auf das Isolationsvermögen erwartet werden. Weiterhin stellt diese neue Verbindungsklasse einen einfachen und kostengünstigen Zugang zu hochfunktionellen Polyetherpolyolen dar. Eigenschaften der Calix[n]resorcinarene, wie z.B. das Komplexierungsverhalten von Ionen oder organischen Verbindungen, können auf diesem Wege in Schaumstoffen nutzbar gemacht werden. Außerdem sind durch diese neuen Polyetherpolyole neue Eigenschaftsvariationen in einer breiten Palette von PUR-Produkten zu realisieren.

Außerdem sind solche Polyetherpolyole, insbesondere die ethoxylierten Calix[n]resorcinarene, als nichtionogene Tenside interessant, da damit gezielte Einstellungen von HLB (hydrophilic-lipophilic-balance)-Werten und Löslichkeiten sowie eine Kombination von Komplexbildung und Tensidwirkung ermöglicht werden. Neben der Erzeugung der erwähnten Eigenschaftsvariationen der Polyurethane kann man damit auch deren technisches Verarbeitungsverhalten bei der Herstellung optimieren.

Die erfindungsgemäßen hochfunktionellen Polyetherpolyole weisen die allgemeine Formel 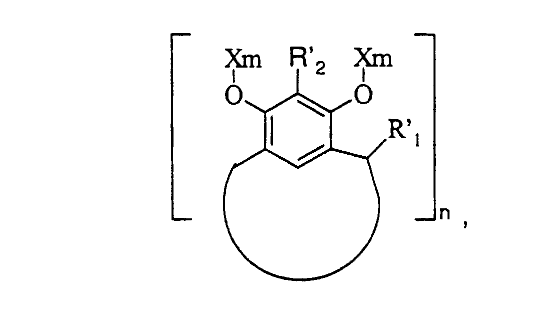 auf.

Die Ziffer n bedeutet eine ganze Zahl von 4 bis 12, vorzugsweise von 4 bis 8. Vorteilhafterweise wird für die gewünschten Anwendungsbereiche hauptsächlich das Tetramer (n = 4) gewählt.

Der Substituent R'₁ stellt dabei einen gesättigten oder ungesättigten, unsubstituierten oder substituierten aliphatischen Rest oder einen aromatischen Rest dar. Vorzugsweise ist der Substituent R'₁ eine Alkylkette von 1 bis 20 Kohlenstoffatomen, linear oder verzweigt, bzw. eine substituierte aromatische Verbindung. Besonders bevorzugt werden Alkylketten, verzweigt oder linear, von 1 bis 10 Kohlenstoffatomen und Phenolderivate.

Der Substituent R'₂ stellt einen gesättigten oder ungesättigten, unsubstituierten oder substituierten aliphatischen Rest oder einen aromatischen Rest, H, OH, Polyalkyletherketten oder Halogen dar. Vorzugsweise ist der Substituent R'₂ eine Alkylkette von 1 bis 20 Kohlenstoffatomen, linear oder verzweigt, bzw. ein substituierter Aromat. Besonders bevorzugt werden Alkylketten, verzweigt oder linear, von 1 bis 10 Kohlenstoffatomen und Phenolderivate. Als R'₂ einsetzbar sind beispielsweise auch -CH₂-Halogen, -CH₂-SO₃H, -CH₂-N(Alkyl)₂ oder Polyalkyletherketten mit 1 bis 20, vorzugsweise jedoch 1 bis 7, Alkylenoxideinheiten.

X sind Polyalkyletherketten oder H, wobei mindestens ein X eine Polyalkyletherkette ist. Vorteilhafterweise bestehen die Polyalkyletherketten aus Ethylenoxid oder Propylenoxid oder Ethylenoxid und Propylenoxid in statistischer oder blockweiser Anordnung. Die Polyalkyletherketten können aber auch aus anderen Alkylenoxiden, wie beispielsweise Butylenoxid, Glycidol oder 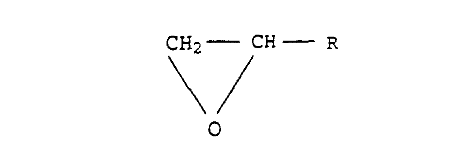 wobei R vorzugsweise -Phenyl, -CH₂-Phenyl, -C₆H₁₃-bedeutet, oder beliebigen Gemischen der genannten oder weiterer Alkylenoxide bestehen.

Durch die Art der verwendeten Alkylenoxide und den Alkoxylierungsgrad können die Eigenschaften der erfindungsgemäßen Polyetherpolyole in einem breiten Rahmen variiert werden. Die Ziffer m bedeutet jeweils eine ganze Zahl im Bereich von 0 bis 20. Vorzugsweise weisen die Alkyletherketten eine Länge vom m gleich 0 bis 7 auf. Bei m gleich 0 bedeutet Xm gleich H. Für den Einsatz der Polyetherole in PUR-Hartschaumstoffen hat sich ein Alkoxylierungsgrad von m = 0 bis 10 bewährt.
Die OH-Zahlen der erfindungsgemäßen Polyetherpolyole liegen im Bereich von 50 bis 1000, vorzugsweise von 50 bis 500, mg KOH/g.

Diese teilweise oder vollständig Alkylenoxide enthaltenden Polyether-Calix[n]resorcinarene sind beispielsweise für die Herstellung von PUR, insbesondere PUR-Hartschaumstoffen, geeignet. Die Alkylenoxidketten, vorzugsweise Ethylenoxidketten, enthaltenden Polyether-Calix[n]resorcinarene sind insbesondere auch als vorwiegend nichtionogene Tenside einsetzbar.

Die erfindungsgemäßen hochfunktionellen Polyetherpolyole sind beispielsweise durch Umsetzung von Calix[n]resorcinarenen der allgemeinen Formel 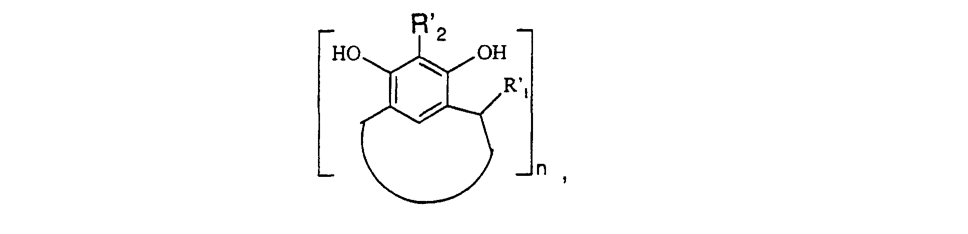 mit Alkylenoxiden unter Verwendung von Katalysatoren herstellbar.

Die Substituenten R'₁ und R'₂ sowie die Ziffer n haben dabei die bereits weiter oben beschriebenen Bedeutungen.

Die Calix[n]resorcinarene sind beispielsweise nach einem Verfahren von J.B. Niederl und H.J. Vogel (J. Am. Chem. Soc. 1940, 62, 2512) herstellbar. Dazu werden Resorcin und ein entsprechender Aldehyd in Ethanol auf 70°C erhitzt. Die Reaktion erfolgt durch Zugabe des Katalysators, insbesondere Schwefelsäure.

Gleichung der Synthese der Calix[n]resorcinarene:

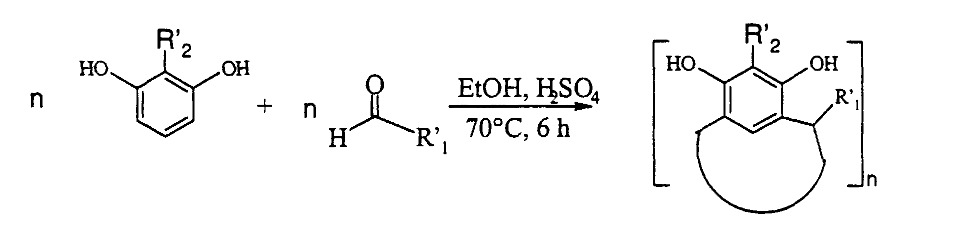

Die Umsetzung der Calix[n]resorcinarene erfolgt mit den oben näher bezeichneten Alkylenoxiden, vorzugsweise durch Anlagerung von Propylenoxid bzw. von Propylenoxid und Ethylenoxid, entweder statistisch oder in Blöcken. Durch die Reaktion der festen und hochschmelzenden Calix[n]resorcinarene mit Alkylenoxiden werden diese verflüssigt und zusätzlich noch die Löslichkeitseigenschaften entscheidend verbessert.

Die Alkoxylierung wird ohne oder im Beisein von Lösungsmitteln durchgeführt. Werden Lösungsmittel eingesetzt, kommen insbesondere inerte, aprotischen Lösungsmitteln oder reaktive Polyetherpolyole, allein oder in Gemischen in Frage.

Beispielsweise werden als Lösungsmittel Diethylenglycoldimethylether, Dibutylether oder Toluol verwendet. Es sind aber auch andere bekannte inerte Lösungsmittel einsetzbar.

Ganz besonders vorteilhaft ist der Einsatz von Polyetherolen als Lösungsmittel. Geeignet sind hierfür alle üblichen Polyetherole, wie sie in der Patent- und sonstigen wissenschaftlichen Literatur beschrieben sind. Vorteilhafterweise werden handelsübliche Polyetherole, wie beispielsweise solche auf der Basis von Sorbitol, Glycerin, Ammoniak, primären oder sekundären Aminen oder Wasser verwendet.

Der Vorteil bei der Verwendung von Polyetherolen als Lösungsmittel liegt darin, dass während der Aufarbeitung des Produktgemisches kein Lösungsmittel zusätzlich zu den normalen Aufarbeitungsschritten abdestilliert werden muss, was zur Vereinfachung der Technologie und zu Kosteneinsparungen führt.

Werden Polyetherpolyole als Lösungsmittel eingesetzt, wird der Anteil der Calix[n]resorcinarene im Polyetherpolyol allein durch dessen begrenzte Löslichkeit im Polyetherpolyol limitiert.

Bei einer Alkoxylierung ohne Verwendung von inerten Lösungsmitteln wird das Calix[n]resorcinaren direkt mit dem Alkylenoxid zur Reaktion gebracht.

Als Katalysatoren für die Alkoxylierung eignen sich insbesondere alle üblichen basischen oder sauren Katalysatoren, wie beispielsweise Kaliumhydroxid, Kalium-tert-butylat, Cäsiumhydroxid, Natrium, Triethyl-, Tributylamin und Bortriflourid-etherat.

Die Katalysatoren werden vorzugsweise in einer Menge von 0,1 bis 5 Ma%, insbesondere von 0,3 bis 1 Ma%, jeweils bezogen auf den Gesamtansatz eingesetzt.

Eine weitere vorteilhafte Möglichkeit zur Herstellung der erfindungsgemäßen hochfunktionellen Polyetherpolyole ist die Umsetzung von Resorcin und/oder Resorcinderivaten mit Aldehyden und anschließender Anlagerung von Alkylenoxiden unter Verwendung von Katalysatoren.

Dieses Verfahren wird vorteilhafterweise in einem einstufigen Prozess ohne zwischenzeitliche Separation der als Zwischenprodukte entstehenden Calix[n]resorcinarene, im Weiteren auch als Eintopfverfahren bezeichnet, durchgeführt.

Als Resorcinderivate werden insbesondere Produkte folgender allgemeiner Formel 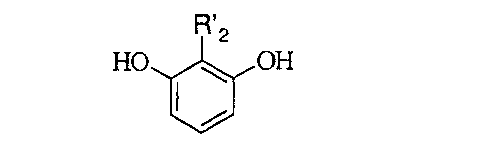 eingesetzt:
R'₂ stellt dabei einen gesättigten oder ungesättigten, unsubstituierten oder substituierten aliphatischen Rest oder einen aromatischen Rest, H (Resorcin), OH (Pyrogallol) oder Halogen dar. Vorzugsweise sind dies Alkylketten, linear oder verzweigt, gesättigt oder ungesättigt, mit 1 bis 20 Kohlenstoffatomen, besonders bevorzugt Kohlenstoffketten der Länge 1 bis 10, insbesondere 1 bis 5. Als R'₂ einsetzbar sind beispielsweise auch substituierte Aromaten, -CH₂-Halogen, -CH₂-SO₃H -CH₂-N(Alkyl)₂ oder Polyalkyletherketten. R'₂ ist besonders bevorzugt H.

Als Aldehyde werden insbesondere Produkte folgender allgemeiner Formel eingesetzt: 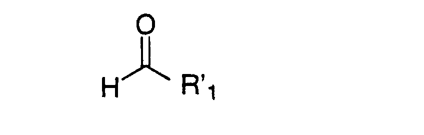 R'₁ stellt dabei einen unsubstituierten oder substituierten aliphatischen oder aromatischen Rest dar. Vorzugsweise sind dies Kohlenstoffketten, gesättigt oder ungesättigt, verzweigt oder linear, mit 1 bis 20 Kohlenstoffatomen, besonders bevorzugt lineare oder verzweigte, gesättigte Kohlenstoffketten mit 1 bis 10 Kohlenstoffatomen und Phenolderivate.

Die Umsetzung der als Zwischenprodukte entstehenden Calix[n]-resorcinarene zu Polyetherpolyolen erfolgt mit Alkylenoxiden, wie sie bereits weiter oben beschrieben wurden.

Auch bei diesem Verfahren können durch die Art der verwendeten Alkylenoxide und den Alkoxylierungsgrad die Eigenschaften der erfindungsgemäßen Polyetherpolyole in einem breiten Rahmen variiert werden.

Das Eintopfverfahren wird ebenfalls ohne oder vorzugsweise im Beisein von Lösungsmitteln durchgeführt. Werden Lösungsmittel eingesetzt, kommen die weiter oben beschriebenen Lösungsmittel oder Polyetherpolyole, allein oder in Gemischen in Frage.

Die Gesamtsynthese kann unter Verwendung verschiedener Katalysatoren für die Bildungsreaktion der Calix[n]resorcinarene und für die Alkoxylierung erfolgen. Besonders vorteilhaft ist es allerdings, einen Katalysator zu wählen, der beide Reaktionen katalysiert.

Als Katalysatoren eignen sich alle üblichen basischen oder sauren Katalysatoren, wie sie beispielhaft weiter oben aufgeführt sind.

Im Speziellen werden für die Ringschlussreaktion zum Calix[n]-resorcinaren Säure oder Lewis-Säure benötigt, während die nachfolgende Alkoxylierung sowohl sauer als auch basisch katalysiert werden kann. Wird Säure oder Lewis-Säure als Katalysator gewählt, wie beispielsweise das vorzugsweise eingesetzte Bortrifluorid, kann das Verfahren ohne Wechsel des Katalysators vor der Alkoxylierung durchgeführt werden. Erfindungsgemäß sind beide Kombinationen ohne zwischenzeitliche Separation des Calix[n]-resorcinaren-Zwischenproduktes möglich.

Die Katalysatoren werden vorzugsweise in einer Menge von insgesamt 0,05 bis 5 Masseprozent (Ma%), insbesondere von 0,2 bis 1 Ma%, jeweils gezogen auf den Gesamtansatz, eingesetzt. Werden in der Gesamtsynthese für die Bildungsreaktion der Calix[n]-resorcinarene und für die Alkoxylierung verschiedene Katalysatoren eingesetzt, so für die Bildungsreaktion der Calix[n]-resorcinarene (mit z.B. Mineralsäure als Katalysator) vorzugsweise in einer Menge von 0,005 g/mmol eingesetztes Resorcin bis 0,9 g/mmol eingesetztes Resorcin, insbesondere von 0,1 g/mmol eingesetztes Resorcin bis 0,07 g/mmol eingesetztes Resorcin, und für die Alkoxylierung vorzugsweise in einer Menge von 0,05 bis 5 Ma%, insbesondere von 0,2 bis 1 Ma%.

Bei beiden Verfahrensvarianten erfolgt die Umsetzung vorteilhafterweise in einer Inertgasatmosphäre bei einer Temperatur von 50 bis 150°C und einem max. Druck von 100 bar, vorzugsweise max. 40 bar, besonders bevorzugt max.10 bar.

Die so hergestellten Polyetherpolyole können auf übliche Art und Weise aufgearbeitet werden. Die Aufarbeitung erfolgt vorzugsweise durch Neutralisation mit Säuren, insbesondere Phosphorsäure, oder durch Ionenaustauschmaterialien, wie z.B. Ambosol, Filtration und Vakuumdestillation zur Abtrennung leichtflüchtiger Nebenprodukte und des Lösungsmittels.

Das erhaltene Produkt ist eine helle bis dunkelbraune Flüssigkeit mit gegebenenfalls hoher Viskosität. Diese liegt je nach Alkoxylierungsgrad und Anteil der Nebenprodukte, den Alkylenglykolen, am Produktgemisch oder der Viskosität des eingesetzten Polyetherpolyols im Bereich von 100 (25°C) bis 30 000 (75°C) mPa s.

Die Erfindung wird an nachfolgenden Beispielen demonstriert, ohne dadurch jedoch eine Eingrenzung vorzunehmen:

### Beispiel 1 Herstellung der Calix[n]resorcinarene

0,5 mol Resorcin in 0,5 mol Pelargonaldehyd wurden in 400 ml Ethanol gelöst. Nach Erreichen der Reaktionstemperatur von 70°C wurde über einen Zeitraum von einer halben Stunden konzentrierte Schwefelsäure (0,04 ml/1 mmol) zugegeben und für weitere 6 h bei dieser Temperatur gerührt.

Die so hergestellten Calix[n]resorcinarene aus aliphatischen Aldehyden wurden durch Zugabe von 400 ml Wasser ausgefällt und neutral gewaschen.

### Beispiel 2 Herstellung der Calix[n]resorcinarene

0,5 mol Resorcin in 0,5 mol 4-Hydroxybenzaldehyd wurden in 400 ml Ethanol gelöst. Nach Erreichen der Reaktionstemperatur von 70°C wurde über einen Zeitraum von einer halben Stunden konzentrierte Schwefelsäure (0,04 ml/1 mmol) zugegeben und für weitere 6 h bei dieser Temperatur gerührt.

Die so hergestellten Calix[n]resorcinarene aus aromatischen Aldehyden wurden nach Abkühlen der Reaktionsmischung auf Raumtemperatur abfiltriert und neutral gewaschen.

### Beispiel 3 Umsetzung mit Propylenoxid

3.1 60 g (64,0 mmol) des Calix[n]resorcinarens mit R'₁ = C₈H₁₇ und R'₂ = H wurden in 400 ml Diethylenglycoldimethylether im Autoklaven gelöst und mit 1 Mol% BF₃-etherat versetzt. Nach Erreichen der Alkoxylierungstemperatur von 70°C wurden stufenweise über 4 h 150 g (2,56 mol) Propylenoxid dosiert. Für weitere 9 h wurde bei 70°C und einem Überdruck von max. 5 bar an Stickstoff gerührt. Die Aufarbeitung erfolgte durch Zugabe von 5 Gew.-% Wasser für eine Stunde bei 90°C und anschließende Vakuumdestillation zur Entfernung des Lösungsmittels.
   Es entstand ein Polyetherpolyol mit folgenden Kennzahlen: OH-Zahl 167 mg KOH/g, Viskosität (25°C) 756 mPa s, Na-Gehalt 16,5 ppm und K-Gehalt 35,3 ppm, Wassergehalt < 0,05 Gew.-%, Anteil des alkoxylierten Calix[n]resorcinarens 73 Gew.-% (GPC), pro Funktionalität konnten 0,1 bis 0,9 PO-Moleküle addiert werden (MALDI-TOF).
3.2 60 g (64,0 mmol) des Calix[n]resorcinarens R'₁ = C₈H₁₇ und R'₂ = H wurden in 400 ml Diethylenglycoldimethylether im Autoklaven gelöst und mit 0,5 Ma% CsOH (fest) versetzt. Nach Inertisierung mit Stickstoff wurde für eine halbe Stunde bei 70°C gerührt. Nach einer Vakuumdestillation zur Entfernung von Wasser wurde auf die Alkoxylierungstemperatur von 135°C aufgeheizt. Über 4 Stunden wurde stufenweise 150 g (2,56 mol) Propylenoxid dosiert. Für weitere 9 h wurde bei einem Stickstoffüberdruck und einem Gesamtdruck von max. 10 bar bei 135°C gerührt. Die Aufarbeitung erfolgte durch Zugabe von 5 Gew.-% eines Ionenaustauschers. Mittels Vakuumdestillation wurden leichtflüchtige Bestandteile einschließlich des Lösungsmittels entfernt.
   Es entstand ein Polyetherpolyol mit folgenden Kennzahlen: OH-Zahl 227 mg KOH/g, Viskosität (75°C) 16 449 mPa s, Na-Gehalt 116 ppm, K-Gehalt 8,9 ppm, Cs-Gehalt 21,5 ppm, Wasser nicht bestimmbar, Säurezahl nicht nachweisbar, Anteil des alkoxylierten Calix[n]resorcinarens 97 Gew.-% (GPC), pro Funktionalität konnten 0,4 - 1,4 PO-Moleküle addiert werden (MALDI-TOF).
3.3 60 g (64,0 mmol) des Calix[n]resorcinarens mit R'₁ = C₈H₁₇ und R'₂ = H wurden in 400 ml Diethylenglycoldimethylether im Autoklaven gelöst und mit 0,5 Ma% KOH versetzt. Zur Alkoholatbildung wurde 1/2 h bei 70°C gerührt. Nach einer Vakuumdestillation zur Entfernung von Wasser wurde auf 135°C aufgeheizt. Danach wurden stufenweise über 4 h 150 g (2,56 mol) Propylenoxid dosiert. Für weitere 9 h wurde bei 135°C und einem Überdruck von max. 5 bar an Stickstoff gerührt. Die Aufarbeitung erfolgte durch Zugabe von 3 Gew.-% Wasser für eine Stunde bei 90°C und anschließende Vakuumdestillation zur Entfernung des Lösungsmittels.
   Es entstand ein Polyetherpolyol mit folgenden Kennzahlen: OH-Zahl 145 mg KOH/g, Viskosität (25°C) 1694 mPa s, Na-Gehalt 114 ppm, K-Gehalt 476 ppm, Wassergehalt 0,073 Gew.-%, Anteil des alkoxylierten Calix[n]resorcinarens 80 Gew.-% (GPC), pro Funktionalität konnten 4 - 5.8 PO-Moleküle addiert werden (MALDI-TOF).

### Beispiel 4 Umsetzung mit Ethylenoxid

90 g (96,0 mmol) des Calix[4]resorcinaren (R = C₈H₁₇) wurden in 400 ml Diethylenglycoldimethylether im Autoklaven gelöst und mit 0,35 Ma% Na versetzt. Zur Alkoholatbildung wurde 1/2 h bei 70°C gerührt. Nach einer Vakuumdestillation zur Entfernung von Wasser wurde auf 135°C aufgeheizt. Danach wurden stufenweise über 4 h 170 g (3,84 mol) Ethylenoxid dosiert. Für weitere 9 h wurde bei 135°C und einem Überdruck von max. 5 bar an Stickstoff gerührt. Die Aufarbeitung erfolgte durch Zugabe von 5 Gew.-% Ambasol/Wasser für eine Stunde bei 90°C und anschließende Vakuumdestillation zur Entfernung des Lösungsmittels.

Es entstand ein Polyetherpolyol mit folgenden Kennzahlen: OH-Zahl 305 mg KOH/g, Viskosität (25°C) 667 mPa s, Na-Gehalt 429 ppm, K-Gehalt 6,5 ppm, Wassergehalt 0,016 Gew.-%, Säurezahl 0,317 mg KOH/g, Anteil des alkoxylierten Calix[4]resorcinarens 70 Gew.-% (GPC), Ethylenglykole 30 Gew.-%.

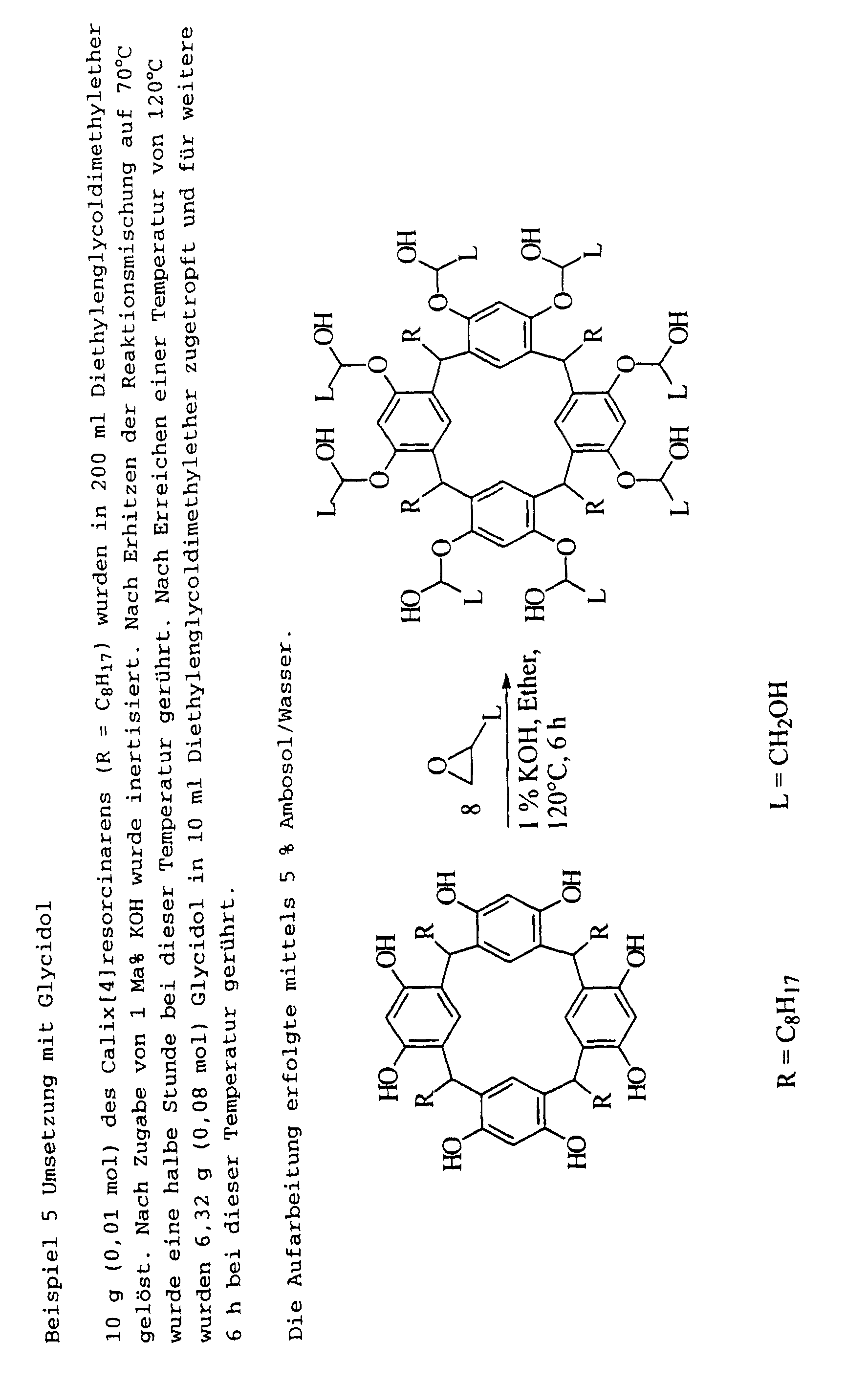

### Beispiel 6

Durch 1 Mol% Bortrifluorid wurde die Synthese der Calix[n]-resorcinarene aus 500 mmol Resorcin mit 500 mmol Pelargonaldehyd in 800 ml eines Polyetherpolyols (Lupranol® 3300) katalysiert. Die Umsetzung erfolgte in einer Inertgasatmosphäre bei einer Temperatur von 70°C. Nach einigen Stunden Reaktionszeit wurden erneut 1 Mol% Katalysator zugegeben und 4,96 mol Propylenoxid bei einer Temperatur von 70°C nach vorangegangener erneuter Inertisierung dosiert. (Rührgeschwindigkeit 125 1/min, max. Druck 5 bar).

Die Aufarbeitung erfolgte durch Zugabe von 5 Gew.-% Wasser und Erwärmen auf 90°C für eine Stunde. Die Abtrennung leichtflüchtiger Bestandteile erfolgte durch eine Vakuumdestillation. Das erhaltene Produkt war eine braune Flüssigkeit mittlerer Viskosität.

Es entstand ein Polyetherpolyol mit folgenden Kennzahlen:
Anteil alkoxyliertes Calixresorc[4]aren 49 Gew.-%, Polyetherpolyol 49 Gew.-%, 2 Gew.-% Propylenglykole, OH-Zahl: 272 mg KOH/g, Viskosität (25°C) 226 mPa s, Na-Gehalt 3,2 ppm, K-Gehalt 20,0 ppm, Säurezahl 2,04 mg KOH/g.

### Beispiel 7

Durch konzentrierte Schwefelsäure (0,04 ml/1 mmol) wurde die Synthese der Calix[n]resorcinarene aus 464 mmol Resorcin und 464 mmol Pelargonaldehyd in einem Polyetherpolyol (Lupranol® 3300) katalysiert. Die Umsetzung erfolgte in einer Inertgasatmosphäre bei einer Temperatur von 70°C. Nach einigen Stunden Reaktionszeit wurde durch Zugabe von KOH neutralisiert und 0,5 Ma% KOH als Katalysator vorgelegt. 4,64 mol Propylenoxid wurden bei einer Temperatur von 135°C nach vorangegangener Inertisierung dosiert (Rührgeschwindigkeit 125 1/min, max. Druck 5 bar).

Die Aufarbeitung erfolgte durch Neutralisation mit Ionenaustauschmaterialien (Ambosol), Filtration und Vakuumdestillation zur Abtrennung leichtflüchtiger Nebenprodukte. Das erhaltene Produkt war eine helle bis dunkelbraune Flüssigkeit.

Es entstand ein Polyetherpolyol mit folgenden Kennzahlen:
Anteil alkoxylierter Calix[4]resorcinaren 26 Gew.-%, Polyertherpolyol 63 Gew.-%, Propylenglykole 11 Gew.-%, OH-Zahl 373 mg KOH/g, Viskosität (25°C) 568 mPa s, K-Gehalt 126 ppm, Na-Gehalt 133 ppm, Wassergehalt < 0,034 %, Säurezahl nicht nachweisbar.

## Patentansprüche

1. Hochfunktionelle Polyetherpolyole der allgemeinen Formel 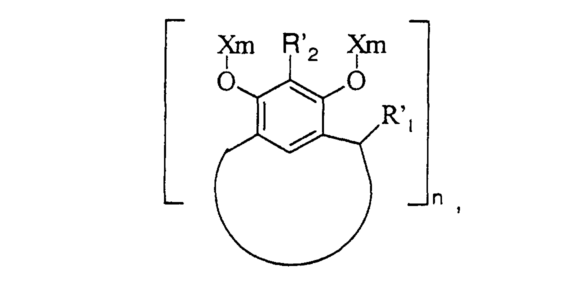 in der R'₁ unsubstituierte oder substituierte aliphatische oder aromatische Reste und R'₂ unsubstituierte oder substituierte aliphatische oder aromatische Reste, H, OH, Polyalkyletherketten oder Halogen sind, X Polyalkyletherketten oder H darstellt, wobei mindestens ein X eine Polyalkyletherkette ist, und m ganze Zahlen von 0 bis 20, wobei bei m gleich 0 Xm H bedeutet, sowie n ganze Zahlen von 4 bis 12 sind.

2. Hochfunktionelle Polyetherpolyole gemäß Anspruch 1, **dadurch gekennzeichnet, dass** X eine Polyetherkette aus Ethylenoxid ist.

3. Hochfunktionelle Polyetherpolyole gemäß Anspruch 1, **dadurch gekennzeichnet, dass** X eine Polyetherkette aus Propylenoxid ist.

4. Hochfunktionelle Polyetherpolyole gemäß Anspruch 1, **dadurch gekennzeichnet, dass** X eine Polyetherkette aus Ethylenoxid und Propylenoxid ist.

5. Hochfunktionelle Polyetherpolyole gemäß einem der Ansprüche 1 bis 4, **dadurch gekennzeichnet, dass** m 1 bis 7 beträgt.

6. Hochfunktionelle Polyetherpolyole gemäß einem der Ansprüche 1 bis 5, **dadurch gekennzeichnet, dass** sie eine OH-Zahl im Bereich von 50 bis 1000 aufweisen.

7. Verfahren zur Herstellung von hochfunktionellen Polyetherpolyolen gemäß Anspruch 1 durch Umsetzung von Calix[n]-resorcinarenen der allgemeinen Formel 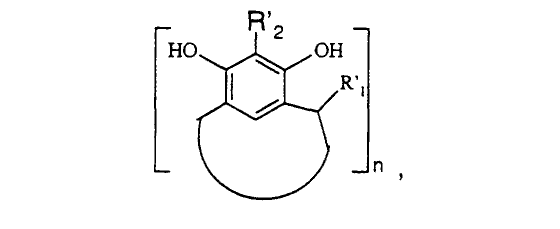 wobei R'₁ unsubstituierte oder substituierte aliphatische oder aromatische Reste und R'₂ unsubstituierte oder substituierte aliphatische oder aromatische Reste, H, OH, Polyalkyletherketten oder Halogen und n ganze Zahlen von 4 bis 12 sind, mit Alkylenoxiden unter Verwendung von Katalysatoren.

8. Verfahren zur Herstellung von hochfunktionellen Polyetherpolyolen gemäß Anspruch 1 durch Umsetzung von Resorcin und/oder Resorcinderivaten mit Aldehyden und anschließender Anlagerung von Alkylenoxiden unter Verwendung von Katalysatoren.

9. Verfahren nach Anspruch 8, **dadurch gekennzeichnet, dass** die hochfunktionellen Polyetherpolyole in einem einstufigen Prozess ohne zwischenzeitliche Separation der Calix[n]-resorcinarene hergestellt werden.

10. Verfahren nach Anspruch 8 oder 9, **dadurch gekennzeichnet, dass** als Resorcinderivate Verbindungen der allgemeinen Formel 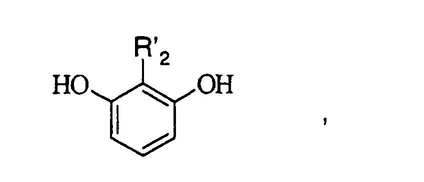 eingesetzt werden, wobei R'₂ ein unsubstituierter oder substituierter aliphatischer oder aromatischer Rest, H, OH, Polyalkyletherketten oder Halogen ist.

11. Verfahren nach einem der Ansprüche 8 bis 10, **dadurch gekennzeichnet, dass** als Aldehyde Verbindungen der allgemeinen Formel 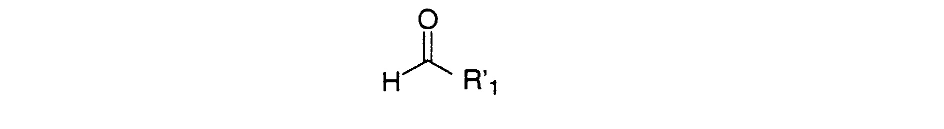 eingesetzt werden, wobei R'₁ ein unsubstituierter oder substituierter aliphatischer oder aromatischer Rest ist.

12. Verfahren nach einem der Ansprüche 7 bis 11, **dadurch gekennzeichnet, dass** als Alkylenoxid Ethylenoxid eingesetzt wird.

13. Verfahren nach einem der Ansprüche 7 bis 12, **dadurch gekennzeichnet, dass** als Alkylenoxid Propylenoxid eingesetzt wird.

14. Verfahren nach einem der Ansprüche 7 bis 13, **dadurch gekennzeichnet, dass** als Alkylenoxide Ethylenoxid und Propylenoxid nacheinander oder im Gemisch eingesetzt werden.

15. Verfahren nach einem der Ansprüche 7 bis 14, **dadurch gekennzeichnet, dass** es unter Verwendung von Lösungsmitteln stattfindet.

16. Verfahren nach einem der Ansprüche 7 bis 15, **dadurch gekennzeichnet, dass** als Lösungsmittel inerte Lösungsmittel, wie Diethylenglycoldimethylether, Dibutylether und Toluol, verwendet werden.

17. Verfahren nach einem der Ansprüche 7 bis 16, **dadurch gekennzeichnet, dass** als Lösungsmittel Polyetherpolyole verwendet werden.

18. Verfahren nach einem der Ansprüche 7 bis 17, **dadurch gekennzeichnet, dass** basische und/oder saure Katalysatoren eingesetzt werden.

19. Verfahren nach einem der Ansprüche 7 bis 18, **dadurch gekennzeichnet, dass** die Umsetzung bei Temperaturen von 50°C bis 150°C durchgeführt wird.

20. Verfahren nach einem der Ansprüche 7 bis 19, **dadurch gekennzeichnet, dass** die Umsetzung bei Drücken von max. 100 bar durchgeführt wird.

21. Hochfunktionelle Polyetherpolyole, herstellbar nach einem Verfahren gemäß einem der Ansprüche 7 bis 20.

22. Verwendung der hochfunktionellen Polyetherpolyole gemäß einem der Ansprüche 1 bis 6 zur Herstellung von Polyurethanen.

23. Verwendung der hochfunktionellen Polyetherpolyole gemäß einem der Ansprüche 1 bis 6 als nichtionogene Tenside.

## Claims

1. A high-functionality polyether polyol of the general formula 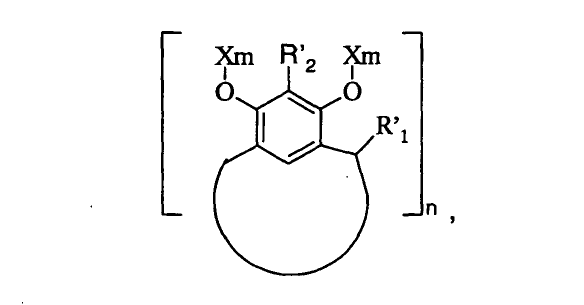 where each R'₁ is an unsubstituted or substituted aliphatic or aromatic radical and each R'₂ is an unsubstituted or substituted aliphatic or aromatic radical, H, OH, polyalkyl ether chain or halogen, each X is a polyalkyl ether chain or H, where at least one X is a polyalkyl ether chain, and m is an integer from 0 to 20, where Xm is H when m is 0, and n is an integer from 4 to 12.

2. The high-functionality polyether polyol according to claim 1, wherein X is a polyether chain made from ethylene oxide.

3. The high-functionality polyether polyol according to claim 1, wherein X is a polyether chain made from propylene oxide.

4. The high-functionality polyether polyol according to claim 1, wherein X is a polyether chain made from ethylene oxide and propylene oxide.

5. The high-functionality polyether polyol according to any of claims 1 to 4, wherein m is from 1 to 7.

6. The high-functionality polyether polyol according to any of claims 1 to 5, wherein its OH number is in the range from 50 to 1000.

7. A process for preparing high-functionality polyether polyols according to claim 1 by reacting calix[n]-resorcinarenes of the general formula 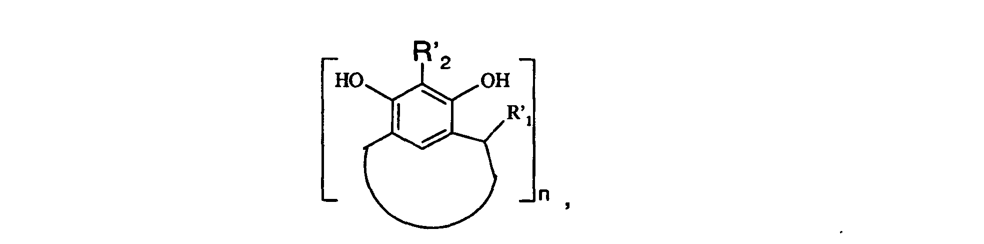 where each R'₁ is an unsubstituted or substituted aliphatic or aromatic radical and each R'₂ is an unsubstituted or substituted aliphatic or aromatic radical, H, OH, polyalkyl ether chain or halogen and n is an integer from 4 to 12, with alkylene oxides using catalysts.

8. The process for preparing high-functionality polyether polyols according to claim 1 by reacting resorcinol and/or resorcinol derivatives with aldehydes and subsequently adding alkylene oxides using catalysts.

9. The process according to claim 8, wherein the high-functionality polyether polyols are prepared in a one-stage process without intermediate separation of the calix[n]resorcinarenes.

10. The process according to claim 8 or 9, wherein the resorcinol derivatives used are compounds of the general formula 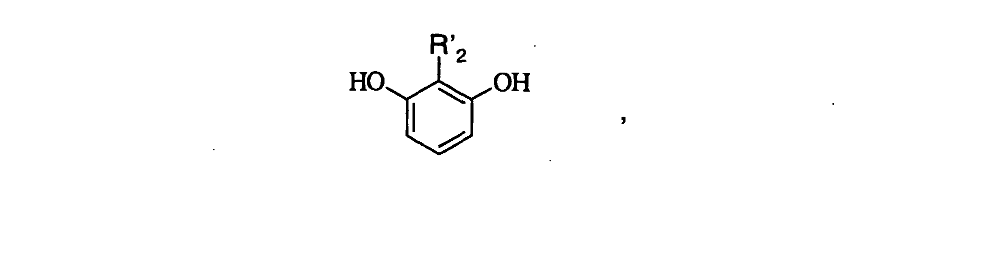 where R'₂ is an unsubstituted or substituted aliphatic or aromatic radical, H, OH, polyalkyl ether chain or halogen.

11. The process according to any of claims 8 to 10, wherein the aldehydes used are compounds of the general formula 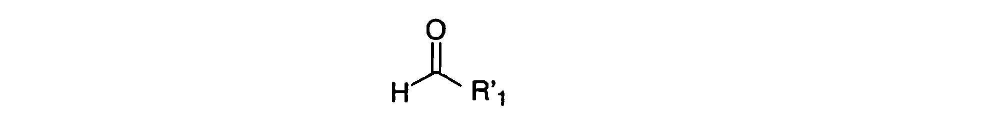 where R'₁ is an unsubstituted or substituted aliphatic or aromatic radical.

12. The process according to any of claims 7 to 11, wherein the alkylene oxide used is ethylene oxide.

13. The process according to any of claims 7 to 12, wherein the alkylene oxide used is propylene oxide.

14. The process according to any of claims 7 to 13, wherein the alkylene oxides used are ethylene oxide and propylene oxide in succession or as a mixture.

15. The process according to any of claims 7 to 14, wherein it takes place using solvents.

16. The process according to any of claims 7 to 15, wherein the solvents used are inert solvents, such as diethylene glycol dimethyl ether, dibutyl ether or toluene.

17. The process according to any of claims 7 to 16, wherein the solvents used are polyether polyols.

18. The process according to any of claims 7 to 17, wherein basic and/or acidic catalysts are used.

19. The process according to any of claims 7 to 18, wherein the reaction is carried out at temperatures of from 50°C to 150°C.

20. The process according to any of claims 7 to 19, wherein the reaction is carried out at pressures of a maximum of 100 bar.

21. A high-functionality polyether polyol preparable by any process according to any of claims 7 to 20.

22. The use of high-functionality polyether polyols according to any of claims 1 to 6 for preparing polyurethanes.

23. The use of high-functionality polyether polyols according to any of claims 1 to 6 as nonionic surfactants.

## Revendications

1. Polyéther-polyols hautement fonctionnels de la formule générale : 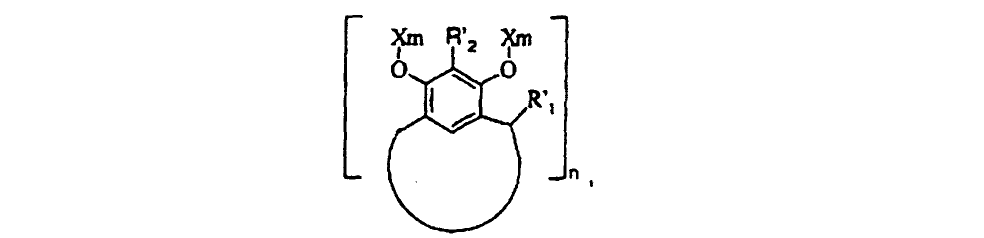 dans laquelle R'₁ représente des radicaux aliphatiques ou aromatiques, substitués ou non substitués, et R'₂ des radicaux aliphatiques ou aromatiques, substitués ou non substitués, H, OH, des chaînes de polyalkyléther ou de l'halogène, X représente des chaînes de polyalkyléther ou H, au moins un X étant une chaîne de polyalkyléther, et m représente des nombres entiers de 0 à 20, Xm représentant H lorsque m est égal à 0, ainsi que n des nombres entiers de 4 à 12.

2. Polyéther-polyols hautement fonctionnels suivant la revendication 1, **caractérisés en ce que** X est une chaîne de polyéther à base d'oxyde d'éthylène.

3. Polyéther-polyols hautement fonctionnels suivant la revendication 1, **caractérisés en ce que** X est une chaîne de polyéther à base d'oxyde de propylène.

4. Polyéther-polyols hautement fonctionnels suivant la revendication 1, **caractérisés en ce que** X est une chaîne de polyéther à base d'oxyde d'éthylène et d'oxyde de propylène.

5. Polyéther-polyols hautement fonctionnels suivant l'une des revendications 1 à 4, **caractérisés en ce que** m a une valeur de 1 à 7.

6. Polyéther-polyols hautement fonctionnels suivant l'une des revendications 1 à 5, **caractérisés en ce qu'**ils présentent un indice de OH de l'ordre de 50 à 1.000.

7. Procédé de préparation de polyéther-polyols hautement fonctionnels suivant la revendication 1, par réaction de Calix[n]résorcinarènes de la formule générale : 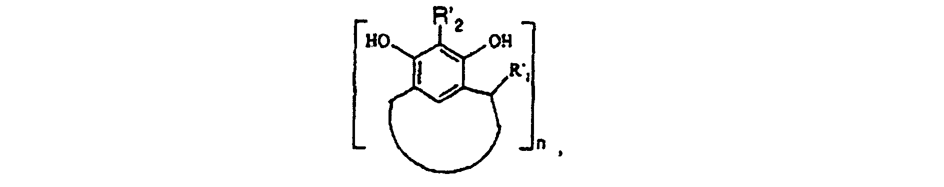 dans laquelle R'₁ représente des radicaux aliphatiques ou aromatiques, substitués ou non substitués, et R'₂ des radicaux aliphatiques ou aromatiques, substitués ou non substitués, H, OH, des chaînes de polyalkyléther ou de l'halogène, et n représente des nombres entiers de 4 à 12, avec des oxydes d'alkylène, en faisant usage de catalyseurs.

8. Procédé de préparation de polyéther-polyols hautement fonctionnels suivant la revendication 1, par réaction de résorcine et/ou de dérivés de résorcine avec des aldéhydes et addition ultérieure d'oxydes d'alkylène, en faisant usage de catalyseurs.

9. Procédé suivant la revendication 8, **caractérisé en ce que** les polyéther-polyols hautement fonctionnels sont préparés dans un processus en une étape, sans séparation intermédiaire des Calix[n]-résorcinarènes.

10. Procédé suivant la revendication 8 ou 9, **caractérisé en ce que**, comme dérivés de résorcine, on met en oeuvre des composés de la formule générale : 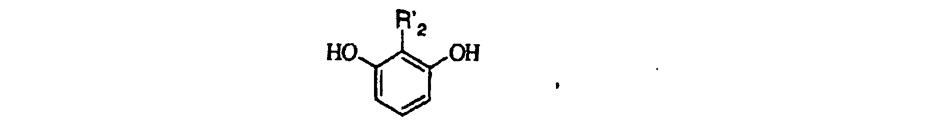 dans laquelle R'₂ représente un radical aliphatique ou aromatique, substitué ou non substitué, H, OH, des chaînes de polyalkyléther ou de l'halogène.

11. Procédé suivant l'une des revendications 8 à 10, **caractérisé en ce que**, comme aldéhydes, on met en oeuvre des composés de la formule générale : 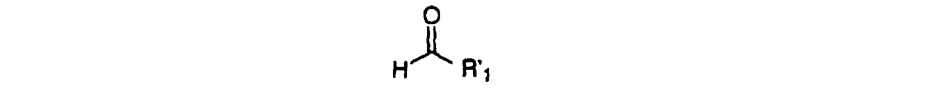 dans laquelle R'₁ représente un radical aliphatique ou aromatique, substitué ou non substitué.

12. Procédé suivant l'une des revendications 7 à 11, **caractérisé en ce que**, comme oxyde d'alkylène, on met en oeuvre de l'oxyde d'éthylène.

13. Procédé suivant l'une des revendications 7 à 12, **caractérisé en ce que**, comme oxyde d'alkylène, on met en oeuvre de l'oxyde de propylène.

14. Procédé suivant l'une des revendications 7 à 13, **caractérisé en ce que**, comme oxydes d'alkylène, on met en oeuvre de l'oxyde d'éthylène et de l'oxyde de propylène successivement ou en mélange.

15. Procédé suivant l'une des revendications 7 à 14, **caractérisé en ce qu'**il a lieu avec utilisation de solvants.

16. Procédé suivant l'une des revendications 7 à 15, **caractérisé en ce que**, comme solvant, on utilise des solvants inertes, tels que de l'éther diméthylique de diéthylèneglycol, de l'éther dibutylique et du toluène.

17. Procédé suivant l'une des revendications 7 à 16, **caractérisé en ce que**, comme solvant, on utilise des polyéther-polyols.

18. Procédé suivant l'une des revendications 7 à 17, **caractérisé en ce qu'**on met en oeuvre des catalyseurs basiques et/ou acides.

19. Procédé suivant l'une des revendications 7 à 18, **caractérisé en ce que** la réaction est effectuée à des températures de 50°C à 150°C.

20. Procédé suivant l'une des revendications 7 à 19, **caractérisé en ce que** la réaction est effectuée à des pressions d'au maximum 100 bars.

21. Polyéther-polyols hautement fonctionnels, que l'on peut préparer suivant un procédé selon l'une des revendications 7 à 20.

22. Utilisation des polyéther-polyols hautement fonctionnels suivant l'une des revendications 1 à 6, pour la préparation de polyuréthannes.

23. Utilisation des polyéther-polyols hautement fonctionnels suivant l'une des revendications 1 à 6, comme agents tensioactifs non ionogènes.
